# EUROPEAN PATENT APPLICATION

(11) **EP 4 361 722 A1**
(43) Date of publication of application: **01.05.2024**
(21) Application number: 22209504.4
(22) Date of filing: 24.11.2022
(51) Int. Cl.: G03B 11/00, G02B 5/20, G02B 7/00

(54) **FILTER ASSEMBLY**

(30) Priority: 24.10.2022 CN 202211307014
(71) Applicant: Shenzhen Velium Precision Optics Co., Ltd., Shenzhen, Guangdong (CN)
(72) Inventor: LIAO, Xi, Chengdu (CN); LONG, Weijia, Shenzhen (CN)
(74) Representative: Ipey

(57) **Abstract**

A filter assembly includes a filter holder, a first filter set, a second filter set, a third filter set, and a fourth filter set. Filters of various functional types are systematically classified into three categories. A first category of filters is capable of changing light effect by rotating. The first category of the filters is served as the first filter set, which is connected to the filter holder, and the light effect is changed by the rotation of the first filter set relative to the filter holder. A second category of filters changes the light effect by two filters relatively rotating or synchronously rotating with the first category of the filters. Regardless of form of rotation, a third category of filters does not change the light effect. The third category of the filters is served as the fourth filter set, which is disposed on a side of the third filter set facing away from the filter holder. Through the above organic combination, a user may arrange filters at corresponding positions according to the categories of the filter sets, so as to realize different operation combinations, which can utilize functional characteristics of most filters, thereby lowering the threshold for using the filters.

## Description

### TECHNICAL FIELD

The present disclosure relates to a technical field of filters, and in particular to a filter assembly.

### BACKGROUND

In the process of photography and videography, a filter is usually added in front of a lens to obtain a better shooting effect. As users' requirement for the shooting effect becomes higher, more categories of filters have emerged. In order to enrich the ways of using filters, in the related art, a structure that enables a single filter to rotate or two filters to relatively rotate is provided on a filter frame of the filter. For example, the applicant's previous application, a Chinese patent No. CN111458959A, discloses a filter mounting structure, in which a first filter frame is rotatable relative to a filter holder or is locked, and a second filter frame is rotatable relative to the first filter frame. There are more ways to use filters and more categories of filters, which results in that too many choices are available to users. However, the use of these filters is in a fragmented manner, which heavily relies on user experience to perform combination, thereby raising the threshold for new users. Thus, it is necessary to provide a filter assembly, to systematically integrate use characteristics of most categories of filters, and organically combine different functional structures for different categories of filters, thereby lowering the threshold for users.

### SUMMARY

An objective of the present disclosure is to provide a filter assembly, to systematically integrate use characteristics of most categories of filters, and organically combine different functional structures for different categories of filters, thereby lowering the threshold for users.

According to an aspect, the present disclosure provides a filer assembly, including:
a filter holder, where a middle part of the filter holder is perforated to form a first through-hole, and a central axial direction of the first through-hole is marked as a first axial direction;
a first filter set, where the first filter set is connected to the filter holder and rotatable around the first axial direction, and the first filter set is capable of changing light effect by rotating around the first axial direction in when light passes through the first filter set;
a second filter set, where the second filter set disposed on a side of the first filter set facing away from the filter holder; and
a third filter set, where the second filter set is disposed on a side of the second filter set facing away from the filter holder, and the third filter set is rotatable around the first axial direction relative to the second filter set, and the second filter set and the third filter set are capable of changing the light effect by relative rotation in a case that light passes through the third filter set and the second filter set in turn;
the second filter set and the third filter set are capable of synchronously rotating along with the first filter set, and the second filter set and the third filter set are capable of changing the light effect by synchronously rotating along with the first filter set when the light passes through the third filter set and the second filter set in turn.

Furthermore, the first filter set is a combination of one or more of a graduated filter, a star filter, and a streak filter.

Furthermore, the second filter set is a polarizing filter, and the third filter set is the polarizing filter.

Furthermore, the filter assembly further includes a fourth filter set, being disposed on a side of the third filter set facing away from the filter holder, and light effects after the light passes through the fourth filter set are the same when the fourth filter set rotates around the first axial direction to any different position.

Furthermore, the fourth filter set is a combination of one or more of a neutral density filter, a diffusion filter, a protection filter, a broadband filter, a narrowband filter and a light pollution filter.

Furthermore, a rotating component and a locking component are disposed on the filter holder, where the rotating component is capable of rotating around the first axial direction, and the locking component is capable of limiting the rotation of the rotating component.

Furthermore, the first filter set and the rotating component are connected by magnetic attraction in the first axial direction;
a first limiting groove is defined on a side of the rotating component facing the first filter set, and a first limiting protrusion is disposed on a side of the first filter set facing the rotating component; and
the first limiting groove matches the first limiting protrusion, to limit relative rotation of the first filter set and the rotating component.

Furthermore, the second filter set and the first filter set are connected by magnetic attraction in the first axial direction;
a second limiting groove is defined on a side of the first filter set facing the second filter set, and a second limiting protrusion is disposed on a side of the second filter set facing the first filter set; and
the second limiting groove matches the second limiting protrusion, to limit relative rotation of the first filter set and the second filter set.

Furthermore, the second filter set and the third filter set are connected by magnetic attraction in the first axial direction;
a third limiting groove is defined on a side of the second filter set facing the third filter set, a third limiting protrusion is disposed on a side of the third filter set facing the second filter set, and the third limiting groove matches the third limiting protrusion, to limit an angle of relative rotation of the second filter set and the third filter set.

Furthermore, the third filter set and the fourth filter set are connected by magnetic attraction in the first axial direction;
a direction of rotating around the first axial direction is marked as a first circumferential direction, a size of the third limiting groove extending along the first circumferential direction is marked as T1, and a size of the third limiting protrusion extending along the first circumferential direction is marked as T2, where a relation as following is satisfied:
T1 >T2.

The present disclosure has following beneficial effects.

The filters of various functional types are systematically classified into three categories. A first category of filters can change the light effect by its own rotation. The first category of filters is served as the first filter set, which is connected to the filter holder. The light effect is changed by the rotation of the first filter set relative to the filter holder. A second category of the filters changes the light effect by two filters relatively rotating or synchronously rotating with the first category of the filters. The second category of the filters is served as the second filter set and the third filter set, which are sequentially disposed on a side of the first filter holder facing away from the filter holder. Regardless of form of rotation, the third category of filters does not change the light effect. The third category of filters is served as the fourth filter set, which is disposed on a side of the third filter set facing away from the filter holder. Through the above organic combination, a user may arrange filters at corresponding positions according to the categories of the filter sets, so as to realize different operation combinations, which can utilize functional characteristics of most filters, thereby lowering the threshold for using the filters.

### BRIEF DESCRIPTION OF THE DRAWINGS

In order to more clearly illustrate the embodiments of the present disclosure or the technical solutions in the related art, the drawings used in the embodiments or the related art will be briefly described below. It should be understood that, the drawings in the following description are merely some embodiments of the present disclosure. For those skilled in the art, obtain other drawings can be obtained based on these drawings without creative works.
FIG. 1 is a three-dimension structural schematic diagram of a filter assembly according to one embodiment of the present disclosure.
FIG. 2 is another three-dimension structural schematic diagram of the filter assembly according to one embodiment of the present disclosure.
FIG. 3 is an exploded structural schematic diagram of the filter assembly according to one embodiment of the present disclosure.
FIG. 4 is another exploded structural schematic diagram of the filter assembly according to one embodiment of the present disclosure.
FIG. 5 is a schematic diagram of a front view of the filter assembly according to one embodiment of the present disclosure.
FIG. 6 is a schematic diagram of a top view of the filter assembly according to one embodiment of the present disclosure.
FIG. 7 is a three-dimensional schematic diagram of a filter holder according to one embodiment of the present disclosure.
FIG. 8 is a structural schematic diagram of a rotating component matching with a locking component according to one embodiment of the present disclosure.
FIG. 9 is a schematic diagram of a top view of a second filter set according to one embodiment of the present disclosure.
FIG. 10 is a schematic diagram of a bottom view of a third filter set according to one embodiment of the present disclosure.
FIG. 11 is a three-dimensional structural schematic diagram of a camera filter assembly according to one embodiment of the present disclosure.

List of reference numerals: 100. filter assembly; 10. filter holder; 11. first through-hole; F1. first axial direction; 21. first filter set; 22. second filter set; 23. third filter set; 24. fourth filter set; 12. rotating component; 13. locking component; F2. first circumferential direction; 200. camera filter assembly; 31. first camera filter set; 32. second camera filter set; 33. third camera filter set; 34. fourth camera filter set; 411. first limiting groove; 412. second limiting groove; 413. third limiting groove; 421. first limiting protrusion; 422. second limiting protrusion; and 423. third limiting protrusion.

### DETAILED DESCRIPTION OF THE EMBODIMENTS

In order to facilitate understanding of the present disclosure, the present disclosure will be detailed below with reference to the relevant drawings. Preferred embodiments of the present disclosure are shown in the accompanying drawings. However, the present disclosure can be implemented in different forms, and is not limited to the embodiments described herein. On the contrary, these embodiments are provided to help more thorough and comprehensive understanding of the content of the present disclosure.

It should be noted that, in a case that a component is described to be "fixed to" another component, this component may be directly on another component or there may be an intermediate component. In a case that a component is considered to be "connected" to another component, this component may be directly connected to another component or there may be an intermediate component at the same time. The terms "vertical", "horizontal", "left", "right" and similar expressions used herein are merely for illustrative purposes.

Unless otherwise defined, all technical and scientific terms used herein have the same meanings as those commonly understood by those skilled in the art of the present disclosure. The terms used herein are merely for the purpose of describing specific embodiments, and are not intended to limit the present disclosure. The term "and/or" as used herein includes any and all combinations of one or more related listed items.

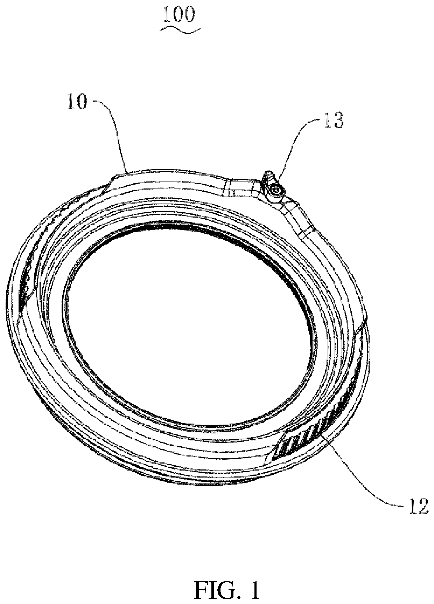

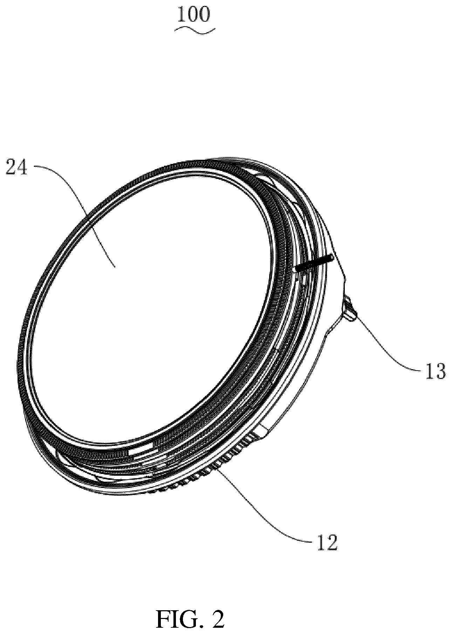

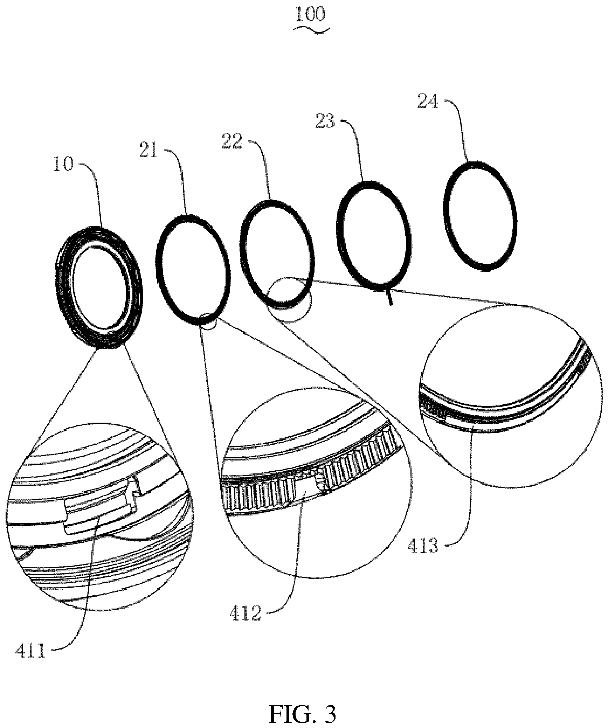

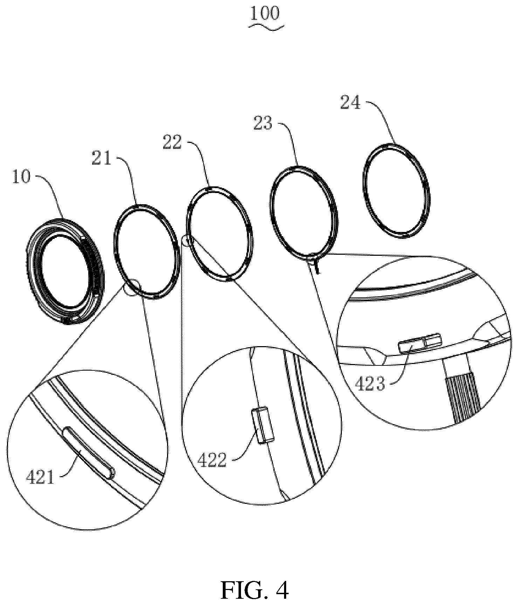

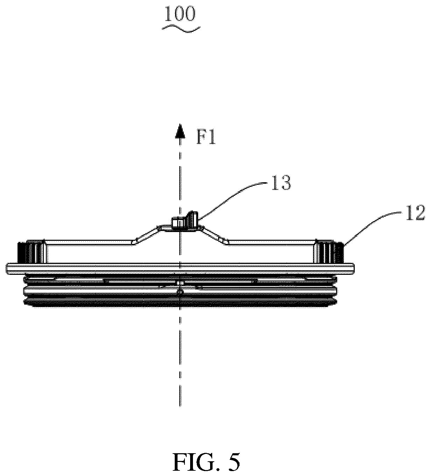

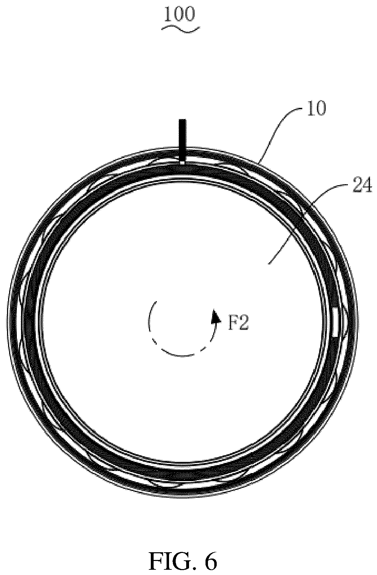

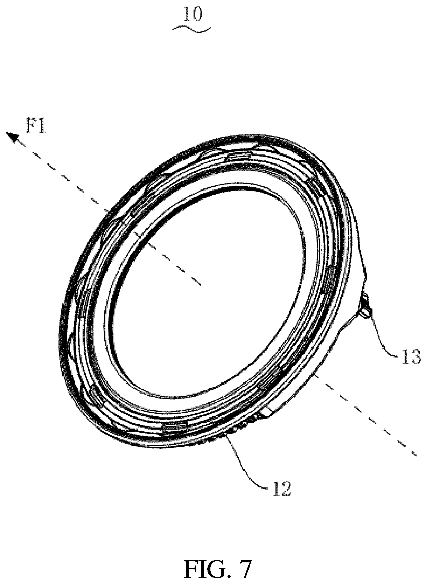

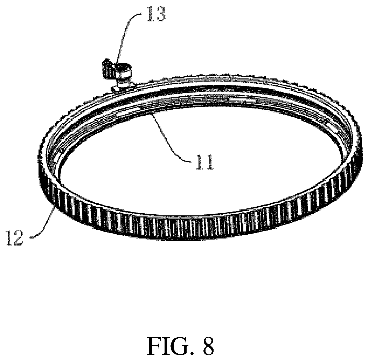

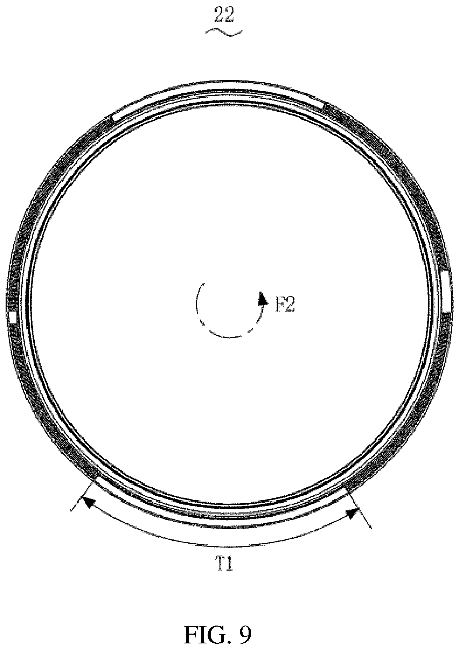

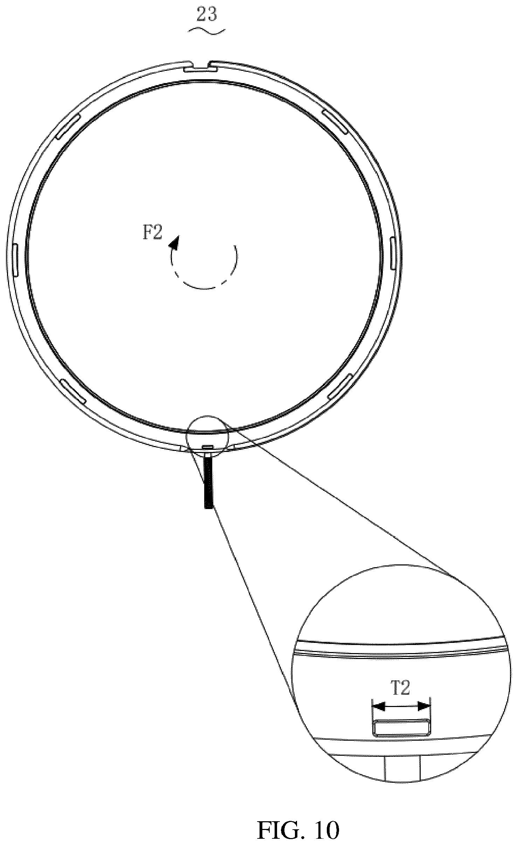

Referring to FIG. 1 to FIG. 10, an embodiment of the present disclosure provides a filter assembly 100, which is configured for photography. The filter assembly includes a filter holder 10, a first filter set 21, a second filter set 22, a third filter set 23 and a fourth filter set 24.

A middle part of the filter holder 10 is perforated to form a first through-hole 11, to allow filters to be disposed at corresponding positions of the first through-hole 11. During photography, light passes through the first through-hole 11 to a photography device. In this embodiment, a central axial direction of the first through-hole 11 is marked as a first axial direction F1.

In this embodiment, the first filter set 21 is connected to the filter holder 10, and is rotatable around the first axial direction F1. In this embodiment, the filter holder 10 is provided with a rotating component 12 that is rotatable around the first axial direction F1, and a locking component 13 that limits the rotation of the rotating component 12. In the first axial direction F1, the first filter set 21 is connected to the rotating component 12 by magnetic attraction.

A direction of rotation around the first axial direction F1 is marked as a first circumferential direction F2. In the first circumferential direction F2, the first filter set 21 is connected to the rotating component 12, so that when the locking component 13 releases the limitation on the rotating component 12, the rotating component 12 drives the first filter set 21 to rotate around the first axial direction F1.

In the concept of the present disclosure, filters of various functional types are systematically classified into three categories. The first category of filters can change the light effect by its own rotation. The first category of filters is used as the first filter set 21, which is connected to the filter holder 10. The light effect is changed by the rotation of the first filter set 21 relative to the filter holder 10.

The first filter set 21 is a combination of one or more of a graduated filter, a star filter, and a streak filter. The star filter is also called a starspikes filter. The above filters have the same characteristics. When light passes through any of the graduated filter, the star filter and the streak filter, the light effect can be changed by rotating the filter. For example, in a case that the streak filter is added during photography, the light in the lens is concentratedly extended along a linear direction under the light guidance of the streak. When the streak is in a horizontal phase, the light is concentratedly extended along a vertical direction, to form a vertical light band. When the streak filter is rotated 90° to make the streak in a vertical phase, the light is concentratedly extended along a horizontal direction, to form a horizontal light band. It can be understood that, the rotation angle of the streak filter is not limited to 90°. As such, when the light passes through the first filter set 21, the first filter set 21 can change the light effect by rotating around the first axial direction F1.

The magnetic attraction between the first filter set 21 and the rotating component 12 may be realized by providing magnetic attraction elements that are magnetically coupled, such as rigid magnets, magnetic strips, magnetic blocks, or flexible magnetic strips, magnetic adhesives, magnetic stickers, etc., on a filter frame of the first filter set 21 or the rotating component 12. Alternatively, the filter frame or the whole or part of the rotating component 12 is made of a magnetic material. In this embodiment, the magnetic attraction between the first filter set 21 and the rotating component 12 is realized by providing a magnetic strip in the filter frame.

In order to allow the rotating component 12 to rotate around the first axial direction F1, an annular guide rail may be provided on the filter holder 10, and the rotating component 12 is arranged to have a circular structure that is slidably cooperated with the annular guide rail, so as to realize the rotation of the rotating component 12 around a center of the annular guide rail, namely around the first axial direction F1. In this embodiment, an end of the rotating component 12 along the first axial direction F1 is connected to the first filter set, and the rotating component 12 is used for user operation, to control the rotation of the first filter set 21.

In order to allow the first filter set 21 to rotate with the rotating component 12, a side of the rotating component 12 facing the first filter set 21 is provided with a first limiting groove 411, and a side of the first filter set 21 facing the rotating component 12 is provided with a first limiting protrusion 421 that matches the first limiting groove 411. The first limiting groove 411 matches the first limiting protrusion 421, so as to limit the relative rotation of the first filter set 21 and the rotating component 12, thereby allowing the first filter set 21 to rotate with the rotating component 12.

In order to allow the locking component 13 to lock the rotating component 12, in this embodiment, the locking component 13 is screwed along the first axial direction F1, to increase a friction force between the locking component 13 and the rotating component 12, thereby limiting the rotation of the rotating component 12 relative to the filter holder 10. It can be understood that the locking component 13 may lock the rotating component 12 in other ways. For example, a braking in another direction is used to increase the friction force between the locking component 13 and the rotating component 12. For example, the locking component 13 is arranged to be in contact with inner and outer rings of the rotating component 12, so as to lock the rotating component 12 by tightly clamping. Alternatively, an electromagnet is provided between the rotating component 12 and the locking component 13, so that the rotating component 12 is locked by forming a strong electromagnetic force through energizing, thereby limiting the rotation of the rotating component 12.

In an embodiment, the second filter set 22 is disposed on a side of the first filter set 21 away from the filter holder 10. In the first axial direction F1, the second filter set 22 and the first filter set 21 are connected by magnetic attraction, the third filter set 23 and the second filter set 22 are connected by magnetic attraction, and the third filter set 23 and the fourth filter set 24 are connected by magnetic attraction.

A second limiting groove 412 is defined on a side of the first filter set 21 facing the second filter set 22, and a second limiting protrusion 422 is disposed on a side of the second filter set 22 facing the first filter set 21. The second limiting groove 412 matches the second limiting protrusion 422, so as to limit the relative rotation of the first filter set 21 and the second filter set 22.

A third limiting groove 413 is defined on a side of the second filter set 22 facing the third filter set 23, and a third limiting protrusion 423 is disposed on a side of the third filter set 23 facing the second filter set 22. A direction of rotating around the first axial direction F1 is marked as a first circumferential direction F2. A size of the third limiting groove 413 extending along the first circumferential direction F2 is marked as T1, and a size of the third limiting protrusion 423 extending along the first circumferential direction F2 is marked as T2, which satisfies the following relation:
T1>T2

In this way, the third limiting groove 413 matches the third limiting protrusion 423, so as to limit an angle of the relative rotation of the second filter set 22 and the third filter set 23.

In the concept of the present disclosure, filters of various functional types are systematically classified into three categories. The second category of filters changes the light effect by relative rotation of two filters. The second category of filters is used as the second filter set 22 and the third filter set 23, which are sequentially disposed on the side of the first filter set 21 facing away from the filter holder 10. The light effect is changed by the second filter set 22 rotating relative to the third filter set 23.

The second filter set 22 is a polarizing filter, and the third filter set 23 is the polarizing filter. By the relative rotation of the two polarizing filters, a light intensity can be adjusted, so as to decrease the light intensity to different degrees. The synchronous rotation of the two polarizing filters can eliminate reflection to different degrees, such as eliminating reflection when light hits a surface of an object to be captured. In this embodiment, the second limiting groove 412 matches the second limiting protrusion 422, so as to limit the relative rotation of the first filter set 21 and the second filter set 22. As such, by rotating the first filter set 21, the second filter set 22 and the third filter set 23 are driven to rotate synchronously with the first filter set 21, thereby realizing the synchronous rotation of the two polarizing filters. Thus, when light passes through the third filter set 23 and the second filter set 22 in turn, the second filter set 22 and the third filter set 23 relatively rotate around the first axial direction F1, which can decrease the light intensity to different degrees; and in addition, the first filter set 21 is rotated to drive the second filter set 22 and the third filter set 23 to synchronously rotate, which can eliminate reflection to different degrees.

The magnetic attraction between the second filter set 22 and the first filter set 21 may be realized by providing magnetic attraction elements that are magnetically coupled, such as rigid magnets, magnetic strips, magnetic blocks, or flexible magnetic strips, magnetic adhesives, magnetic stickers, etc., on a filter frame of the first filter set 21 or a filter frame of the second filter set 22. Alternatively, the whole or part of the filter frame is made of a magnetic material. In this embodiment, the magnetic attraction between the second filter set 22 and the first filter set 21 is realized by providing a magnetic strip in the filter frame.

The magnetic attraction between the third filter set 23 and the second filter set 22 may be realized by providing magnetic attraction elements that are magnetically coupled, such as rigid magnets, magnetic strips, magnetic blocks, or flexible magnetic strips, magnetic adhesives, magnetic stickers, etc., on a filter frame of the second filter set 22 or a filter frame of the third filter set 23. Alternatively, the whole or part of the filter frame is made of a magnetic material. In this embodiment, the magnetic attraction between the third filter set 23 and the second filter set 22 is realized by providing a magnetic strip in the filter frame.

In the concept of the present disclosure, filters of various functional types are systematically classified into three categories. Regardless of form of rotation, the third category of filters does not change the light effect. The third category of filters is served as the fourth filter set 24 and disposed on a side of the third filter set 23 facing away from the filter holder 10.

The fourth filter set 24 is a combination of one or more of a neutral density filter, a diffusion filter, a protection filter, a broadband filter, a narrowband filter, and a light pollution filter.

The diffusion filter is also called a soft focus filter, a mist filter, a fog filter, a dreamy filter, and a softening filter, etc. A most common type of broadband filter is a UV/IR CUT filter. The UV/IR CUT filter blocks ultraviolet and infrared rays, to permit only visible spectrum of light rays to pass through and get captured by a camera. The LRGB filter that is commonly used in black and white cameras may also be classified as the broadband filter. A UV filter is often used in daily photography. In the era of film photography, films are extremely sensitive to ultraviolet light, so the UV filter typically needs to be added in front of the lens, to prevent the ultraviolet light from passing into the lens and thereby affecting the sensitivity. The light pollution filter is a filter manufactured to block artificial light. The common types of light pollution filter include an L-Pro filter, a UHC filter, and a ClearSky filter that are manufactured by Optolong, the Astro Nightscape filter and the Astro Multispectra filter that are manufactured by STC, a company in Taiwan, and the LPS P2 filter that is manufactured by IDAS, a company in Japan, etc. The narrowband filter is a filter that can allow only a specific wavelength to pass through. The above filters have the same characteristics. When light passes through one of the neutral density filter, the diffusion filter, the protection filter, the broadband filter, the narrowband filter, and the light pollution filter, the light effect is not changed even if the filter is rotated. Thus, when the fourth filter set 24 rotates around the first axial direction F1 to any different position, light effects after passing the fourth filter set 24 are the same.

The magnetic attraction between the fourth filter set 24 and the third filter set 23 may be realized by providing magnetic attraction elements that are magnetically coupled, such as rigid magnets, magnetic strips, magnetic blocks, or flexible magnetic strips, magnetic adhesives, magnetic stickers, etc., on a filter frame of the fourth filter set 24 or a filter frame of the third filter set 23. Alternatively, the whole or part of the filter frame is made of a magnetic material. In this embodiment, the magnetic attraction between the third filter set 23 and the fourth filter set 24 is realized by providing a magnetic strip in the filter frame.

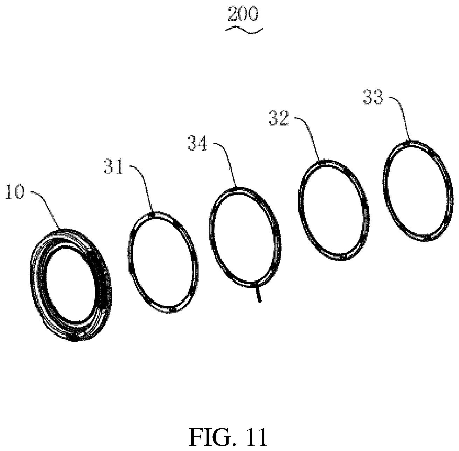

Referring to FIG. 11, the present disclosure further provides a camera filter assembly 200.

The camera filter assembly 200 and the filter assembly 100 may have the same structure of the filter holder 10 and the same structure of the filter frames. The difference lies in that application scenarios are different. The filter assembly 100 is applied to motion or still shots such as photography, videography, film making, or short video recording, etc., while the camera filter assembly 200 is mainly applied to still shots such as photo-taking.

The camera filter assembly 200 includes a filter holder 10, a first camera filter set 31, a second camera filter set 32, a third camera filter set 33 and a fourth camera filter set 34.

The first camera filter set 31 is a polarizing filter. The fourth camera filter set 34 is the polarizing filter. The second camera filter set 32 is a combination of one or more of a graduated filter, a star filter, and a streak filter. The third camera filter set 33 is a combination of one or more of a neutral density filter, a diffusion filter, a protection filter, a broadband filter, a narrowband filter, and a light pollution filter.

In this way, filters of various functional types are systematically classified into three categories. The first category of filters can change the light effect by its own rotation. The first category of filters is served as the first filter set 21, which is connected to the filter holder 10, and the light effect is changed by the rotation of the first filter set 21 relative to the filter holder 10. The second category of filters follows the rotation of the first category of filters by the relative rotation or synchronous rotation of the two filters, so as to change the light effect. The second category of filters is served as the second filter set 22 and the third filter set 23, which are sequentially disposed on a side of the first filter set 21 facing away from the filter holder 10. Regardless of form of rotation, the third category of filters does not change the light effect. The third category of filters is served as the fourth filter set 23 and disposed on a side of the third filter set 23 facing away from the filter holder 10. Through the above organic combination, a user can arrange filters at the corresponding positions according to the categories of the filter sets, to realize different operation combinations, which can utilize functional characteristics of most filters, thereby lowering the threshold for using the filters.

The foregoing embodiments merely express several embodiments of the present disclosure. Although the description is specific and detailed, it cannot be understood as a limitation on the scope of patent disclosure. It should be noted that for those skilled in the art, certain modifications and improvements can be made without departing from the concept of the present disclosure, which belong to the protection scope of the present disclosure. Therefore, the scope of protection of the present disclosure patent shall be subject to the appended claims.

## Claims

1. A filter assembly, comprising:
a filter holder, wherein a middle part of the filter holder is perforated to form a first through-hole, and a central axial direction of the first through-hole is marked as a first axial direction;
a first filter set, wherein the first filter set is connected to the filter holder and rotatable around the first axial direction, and the first filter set is capable of changing light effect by rotating around the first axial direction when light passes through the first filter set;
a second filter set, wherein the second filter set is disposed on a side of the first filter set facing away from the filter holder; and
a third filter set, wherein the third filter set is disposed on a side of the second filter set facing away from the filter holder, and the third filter set is rotatable around the first axial direction relative to the second filter set, and the second filter set and the third filter set are capable of changing the light effect by relative rotation when the light passes through the third filter set and the second filter set in turn;
wherein the second filter set and the third filter set are capable of synchronously rotating along with the first filter set, and the second filter set and the third filter set are capable of changing the light effect by synchronously rotating along with the first filter set when the light passes through the third filter set and the second filter set in turn.

2. The filter assembly according to claim 1, wherein the first filter set is a combination of one or more of a graduated filter, a star filter, and a streak filter.

3. The filter assembly according to claim 1, wherein the second filter set is a polarizing filter, and the third filter set is the polarizing filter.

4. The filter assembly according to claim 1, further comprising:
a fourth filter set, wherein the fourth filter set is disposed on a side of the third filter set facing away from the filter holder, and light effects after the light passes through the fourth filter set are the same when the fourth filter set rotates around the first axial direction to any different position.

5. The filter assembly according to claim 4, wherein the fourth filter set is a combination of one or more of a neutral density filter, a diffusion filter, a protection filter, a broadband filter, a narrowband filter and a light pollution filter.

6. The filter assembly according to claim 1, wherein a rotating component and a locking component are disposed on the filter holder, where the rotating component is capable of rotating around the first axial direction and the locking component is capable of limiting the rotation of the rotating component.

7. The filter assembly according to claim 6, wherein the first filter set and the rotating component are connected by magnetic attraction in the first axial direction;
a first limiting groove is defined on a side of the rotating component facing the first filter set, and a first limiting protrusion is disposed on a side of the first filter set facing the rotating component; and
the first limiting groove matches the first limiting protrusion, to limit relative rotation of the first filter set and the rotating component.

8. The filter assembly according to claim 1, wherein the second filter set and the first filter set are connected by magnetic attraction in the first axial direction;
a second limiting groove is defined on a side of the first filter set facing the second filter set, and a second limiting protrusion is disposed on a side of the second filter set facing the first filter set; and
the second limiting groove matches the second limiting protrusion, to limit relative rotation of the first filter set and the second filter set.

9. The filter assembly according to claim 4, wherein the second filter set and the third filter set are connected by magnetic attraction in the first axial direction;
a third limiting groove is defined on a side of the second filter set facing the third filter set, a third limiting protrusion is disposed on a side of the third filter set facing the second filter set, and the third limiting groove matches the third limiting protrusion, to limit an angle of relative rotation of the second filter set and the third filter set.

10. The filter assembly according to claim 9, wherein,
the third filter set and the fourth filter set are connected by magnetic attraction in the first axial direction;
a direction of rotating around the first axial direction is marked as a first circumferential direction, a size of the third limiting groove extending along the first circumferential direction is marked as T1, and a size of the third limiting protrusion extending along the first circumferential direction is marked as T2, where a relation as following is satisfied:
T1>T2.
